# EUROPEAN PATENT APPLICATION

(11) **EP 4 765 446 A1**
(43) Date of publication of application: **24.06.2026**
(21) Application number: 25225222.6
(22) Date of filing: 18.12.2025
(51) Int. Cl.: H01M 50/533, H01M 10/04, H01M 50/538, H01M 10/0587

(54) **APPARATUS AND METHOD FOR BUILDING AN ELECTROCHEMICAL CELL FOR BATTERY PRODUCTION**

(30) Priority: 20.12.2024 IT 202400029562
(71) Applicant: G.D S.p.A., 40133 Bologna (BO) (IT)
(72) Inventor: BIONDI, Andrea, 40133 Bologna (IT); VENTURA, Maurizio, 40133 Bologna (IT); CAVAZZA, Luca, 40133 Bologna (IT)
(74) Representative: Susanetto, Carlo

(57) **Abstract**

An apparatus for building an electrochemical cell intended for battery production comprises a dispensing unit of a conductor element (3) having a main body (4) and a plurality of fins (4a) protruding from the main body (4), a coupling unit configured to couple the conductor element (3) with at least another element to form an internal assembly of the electrochemical cell. The apparatus further comprises a folding unit configured to fold the fins (4a) increasing the inclination of the fins with respect to the main body (4) while the conductor element (3) is moved from the dispensing unit to the coupling unit.

The folding unit comprises a deflector element (13) configured to abut the fins (4a), and a nozzle (14) arranged at least partially upstream of the deflector element (13) and configured to dispense a jet of air (F) against the fins (4a) so that the fins (4a) are preliminarily folded before they abut the deflector element (13).

## Description

The present invention relates to an apparatus and a method for building an electrochemical cell. An electrochemical cell is a device capable of converting chemical energy into electrical energy (and/or vice versa), such as galvanic cells, whether primary or secondary, combustible cells or electrolytic cells.

The present invention is preferably, though not exclusively, applied to the field of secondary cell production, such as lithium-ion batteries, which will be referred to hereinafter without losing generality.

As known, the production of electrochemical cells provides, in its most general terms:
- a step of preparing the electrochemical cell, in which an internal assembly of conductor elements (one for the anode and one for the cathode) and separator elements is built, and in which this internal assembly is inserted in a protective outer casing,
- a step of filling the electrochemical cell with an electrolyte solution that is placed in contact with the internal assembly, and finally,
- a step of forming the electrochemical cell to make it suitable for dispensing and/or storing electrical energy.

The preparation step, in particular, provides that the conductor elements and separator elements are coupled according to a predefined structure, e.g. by overlapping them in alternating plane layers, as in the case of prismatic batteries, or by spirally winding alternating layers of conductor strips and separator strips to form a coil, as in the case of cylindrical batteries.

In any case, the structures of the conductor elements and separator elements, generically indicated by the expression "internal assemblies", obtained by the coupling of the conductor elements alternating with the separator elements, before being introduced into the protective outer casing, are fixed at the opposite axial ends to special electrical collectors, each of which, by connecting to each other the different elements of a same type of conductor (e.g. the anode or the cathode), forms one of the two electrical poles of the electrochemical cell.

In order to ease the connection to the respective electrical collector, it is known to obtain, on the conductor elements, fins which protrude laterally and are configured to be folded with respect to the main body of the conductor element.

Once the conductor elements are coupled to each other (and with the separator elements) to form the internal assembly of the electrochemical cell, the fins of the individual conductor elements, protruding from the axial ends of the internal assembly can conveniently be folded by flattening them on the base of the internal assembly, forming a conductor element continuous plane on which the electrical collector is fixed.

In addition, in some production processes, the fins of the conductor elements are partially folded towards the aforementioned final flattening configuration already before the step of coupling the conductor elements.

In the present disclosure as well as in the herein enclosed claims, certain terms and expressions are deemed to have, unless otherwise expressly indicated, the meaning expressed in the following definitions.

The term "internal assembly" of an electrochemical cell generically refers to the structure in which the conductor elements and the separator elements are combined within the electrochemical cell. This structure may consist of substantially plane layers alternating on top of each other (obtained by means of "stacking" or "Z-folding" techniques) or it may be a cylindrical coil structure with a circular cross-section or more generally with an elliptical cross-section, formed by the spiral winding of conductor strips and separator strips alternating with each other.

The term "fin" of a conductor element refers to a conductor element portion protruding perimetrally from a main body of the conductor element.

Preferably, a fin protrudes from only one side of the body of the conductor element. In the case of a strip-shaped conductor element, the fins are protruding from one side of the strip.

A fin is "folded" with respect to the main body when its inclination (more precisely the inclination of the plane defined by the fin) with respect to the plane defined by the main body is other than zero. Correspondingly, it is specified that the operation of "folding" a fin means increasing the aforementioned inclination with respect to the main body.

The terms "upstream" and "downstream" indicate operating steps that have their own specific position in the sequencing of a process. For example, if operation B occurs upstream of operation A, it means that operation B will occur sequentially before operation A, whereas if operation B occurs downstream of operation A, it means that operation B will occur sequentially after operation A.

These considerations are also extended by analogy to devices, mechanical components, or other structural elements of an apparatus that are positioned respectively upstream or downstream of other devices, mechanical components, or structural elements according to the sequential operating flow of the process.

A first direction is "substantially perpendicular" to a second direction when the angle formed by the two directions is between 80° and 100°.

A first direction is "substantially parallel" to a second direction when the two directions are parallel or inclined to each other by an angle not greater than 10°.

The term "nozzle" referred to a pneumatic circuit, refers to the free end part of the pneumatic circuit from which a jet of air or other fluid can be dispensed, without specific limitations in terms of nozzle design. In particular, the nozzle can have an air outlet cross-section of any shape and with a greater or smaller area than the duct to which it is connected.

The Applicant, in the context of the constant need to increase the performance and efficiency of production processes, has preliminarily observed how, in a production line for preparing an electrochemical cell, the feed rate of the conductor elements with respect to the unit that carries out the coupling thereof represents an important element limiting the production capacity of the line itself.

The Applicant has also verified that partially folding the fins with respect to the main body of the conductor element before forming the internal assembly facilitates a correct and even flattening of the fins once the internal assembly is formed.

Furthermore, the Applicant has verified that it is particularly convenient to fold the fins when moving the conductor element along a defined feed path upstream of the formation of the internal assembly.

The Applicant also found that the fins have to be folded gently so as not to risk damaging them or even breaking them.

The Applicant has however noted that, in order to fold the fins effectively, in particular when the movement speeds of the conductor elements are very high, components that extend for relatively long stretches of the feed path and/or components that need to be handled are often required, resulting in an increase in the footprint and complexity of the production plant.

The Applicant therefore felt the need to manufacture a folding unit capable of folding the fins of a conductor element that is easy to manufacture and particularly compact.

In responding to this requirement, the Applicant realised that different folding modes could be used to properly fold the fins, so as take advantage of their respective peculiarities synergistically.

The Applicant finally found that a folding unit comprising a nozzle configured to blow a jet of air onto the fins of a conductor element in transit to a coupling unit so as to submit them to an initial folding, and a deflector element, positioned, at least in part, immediately downstream of the nozzle and configured to abut and fold the fins more firmly into the desired folded position, made it possible to achieve excellent folding results, both in terms of speed and quality of processing, in very small spaces and with no need for moving mechanical parts.

The present solution, in a first aspect thereof, therefore relates to an apparatus for building an electrochemical cell intended for battery production.

Preferably, the apparatus comprises a dispensing unit configured to dispense a conductor element along a feed direction.

Preferably, the conductor element comprises a main body and a plurality of fins protruding from said main body.

Preferably, the apparatus comprises a coupling unit.

Preferably, the coupling unit is configured to receive said conductor element dispensed by said dispensing unit.

Preferably, the coupling unit is configured to couple said conductor element with at least another conductor element to form an internal assembly of said electrochemical cell.

Preferably, the apparatus comprises a folding unit.

Preferably, the folding unit is interposed between said dispensing unit and said coupling unit.

Preferably, the folding unit is configured to fold said fins with respect to said main body. More precisely, the folding unit is configured to fold said fins so as to increase their inclination with respect to said main body.

Preferably, the folding unit is configured to fold said fins while said conductor element is moved from said dispensing unit to said coupling unit.

Preferably, the folding unit comprises a deflector element configured to abut said fins.

Preferably, the folding unit comprises a nozzle connected to a pneumatic circuit and configured to dispense a jet of air against said fins.

Preferably, said jet of air is dispensed along a direction transverse to a plane defined by said main body.

Preferably, with respect to said feed direction, said nozzle is arranged at least partially upstream of said deflector element, so that said jet of air is dispensed against said fins before said fins abut said deflector element.

The present solution, in a second aspect thereof, relates to a method for building an electrochemical cell for battery production.

Preferably, the method comprises the step of dispensing, along a feed direction, a conductor element having a main body and a plurality of fins protruding from said main body.

Preferably, the method comprises the step of folding said fins with respect to the main body of said conductor element. More precisely, said folding provides to increase the inclination of said fins with respect to said main body.

Preferably, the method comprises the step of coupling said conductor element with at least another conductor element to form an internal assembly of said electrochemical cell.

Preferably, said folding step comprises the step of dispensing a jet of air against said fins so as to partially fold said fins with respect to said main body.

Preferably, said jet of air is dispensed along a direction transverse to a plane defined by the main body of said conductor element.

Preferably, said folding step comprises the step of abutting said fins partially folded with a deflector element to further fold said fins with respect to said main body.

Thanks to these characteristics, the present solution makes it possible to fold the fins of a conductor element before forming an internal assembly in a simple, effective and space-saving manner. In fact, the present solution takes advantage of the combined effect of the jet of air, which, alone, would not be able to sufficiently and permanently fold the fins, especially with little space available and in the presence of high dispensing speeds of the conductor element, with the mechanical action of the deflector element, which, alone, could only permanently fold the fins if extended over a relatively long section of the feed path of the conductor element.

The function of the jet of air is to ensure that the fins do not abut the deflector element with a too high incidence angle, which may cause the fins to crumple or even tear away from the main body of the conductor element. Instead, due to the effect of the jet of air, the fins come into contact with the deflector element in a sufficiently inclined manner so that the latter can be configured to perform a vigorous folding action on the fins in a relatively small space and short time.

In at least one of the aspects set forth above, the present solution may have one or more of the preferred characteristics described below.

In some embodiments, said folding unit is configured to fold said fins without changing said feed direction of said conductor element.

In some embodiments, said nozzle is formed in said deflector element.

In this way, the two folding systems are integrated in a single device with a clear advantage in terms of compactness.

In some embodiments, said deflector element is fixedly mounted on the frame of the apparatus.

Thus, the folding unit does not need any handling mechanism, which is a further advantage in terms of cost and complexity.

In some embodiments, said deflector element comprises a folding wall configured to abut said fins and fold said fins with respect to said main body.

Preferably, said folding wall is configured to be inclined, more preferably substantially perpendicular, with respect to a plane defined by said main body of the conductor element.

Thus, the deflector element exerts a strong folding action, making it possible to obtain the desired inclination in a small space.

In some embodiments, said nozzle is configured to dispense said jet of air parallel to said folding wall, more preferably along said folding wall.

Thus, the jet of air is concentrated on the fins moving closer to the folding wall, resulting in a much more efficient folding action.

In some embodiments, said deflector element comprises a base, preferably configured to extend parallel to the main body of said conductor element.

In some embodiments, said folding wall rises from said base. Preferably, said folding wall rises perpendicularly from said base, more preferably at one side of said base.

In some embodiments, said folding wall comprises a first portion and a second portion adjacent and consecutive to said first portion.

In some embodiments, said second folding wall portion extends away from said first portion along a folding direction inclined with respect to said feed direction, moving closer to said main body.

In some embodiments, said folding direction is inclined with respect to said feed direction by an angle greater than 5°, preferably by an angle of between 10° and 30°, more preferably by an angle of around 15°.

In some embodiments, said first folding wall portion is substantially parallel to said feed direction.

Preferably, said first folding wall portion is configured to be spaced from said fins, more preferably by a measure between about 1 mm and about 5 mm.

In some embodiments, said first folding wall portion extends along said feed direction for a measure between about 15 mm and about 20 mm.

In some embodiments, said second folding wall portion extends along said feed direction for a measure between about 15 mm and about 20 mm.

In some embodiments, said folding wall comprises a third portion extending from said second portion on the side opposite said first portion.

Preferably, said third portion is substantially parallel to said feed direction.

In some embodiments, said third folding wall portion extends along said feed direction for a measure between approximately 2 mm and approximately 6 mm.

Thus, the fins are held in the folded position induced by the second folding wall portion for a further period of time, consolidating the folding of the fins.

In some embodiments, said nozzle is open at said first folding wall portion.

Preferably, said nozzle is open, at least partially, at said second folding wall portion.

In some embodiments, said nozzle comprises an open slot between said base and said folding wall.

In some embodiments, said conductor element is shaped in a strip.

Preferably, said strip is dispensed continuously from said dispensing unit.

In some embodiments, said coupling unit comprises a winding unit for winding said strip.

In some embodiments, said coupling unit comprises a winding pin of said strip, configured to form a coil of said electrochemical cell.

In some embodiments, said deflector element is spaced from said winding pin by at least 20 mm, preferably at least 30 mm.

In particular, it is preferred that the deflector element is as close as possible to the winding pin, whereby the distance between these components also depends on the size of the coil that is formed on the winding plug.

In some embodiments, before said step of folding, said fins are substantially coplanar with said main body of said conductor element.

In some embodiments, before said step of abutting, said fins are folded by said jet of air so as to form an angle of at least 30° with respect to said main body.

In some embodiments, after said step of folding and before said step of coupling, said fins are folded with respect to said main body by an angle of at least 30°, preferably at least 45°.

In some embodiments, said step of dispensing a jet of air is maintained, at least in part, during said step of abutting.

In some embodiments, said step of folding is performed while said conductor element is moving along said direction.

The features and advantages of the present solution will become clearer hereinbelow from the detailed description of an embodiment shown, by way of exemplary and non-limiting example, with reference to the appended drawings, wherein:
- Figure 1 is a schematic perspective view of a portion of an apparatus for building electrochemical cells intended for battery production, made according to the present solution;
- Figure 2 is a schematic perspective view from a different point of view of the apparatus in Figure 1;
- Figure 3 is a sectional view along a vertical plane A-A of the apparatus of Figure 1;
- Figure 4 is a sectional view along a vertical plane of the apparatus of Figure 1 observed from the side opposite to Figure 3;

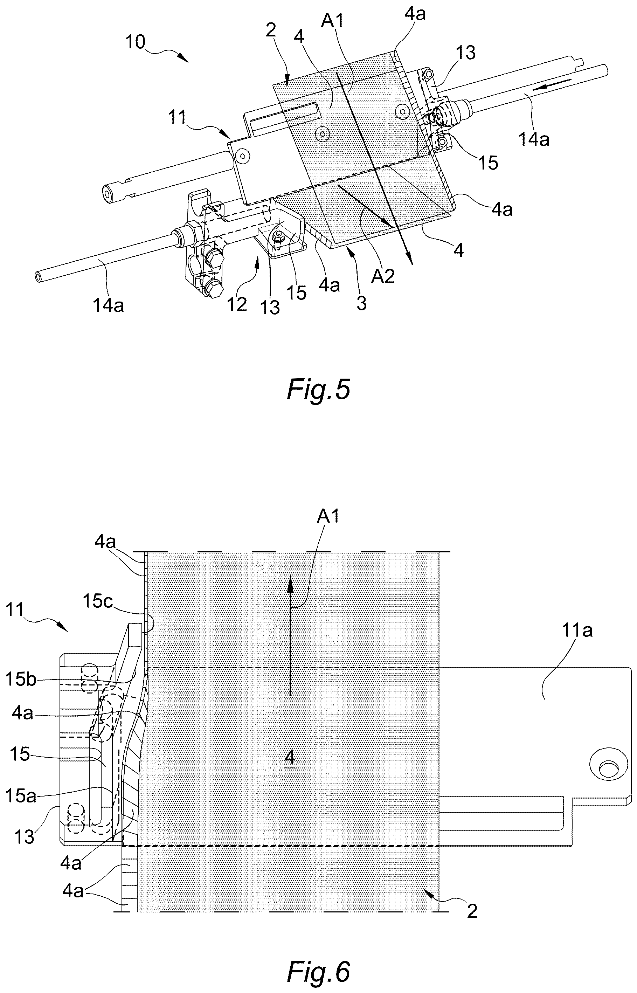

- Figure 5 is a schematic perspective view of a folding unit of the apparatus in Figure 1 isolated from the rest of the apparatus;
- Figure 6 is a schematic view from above of a component of the folding unit of Figure 5;

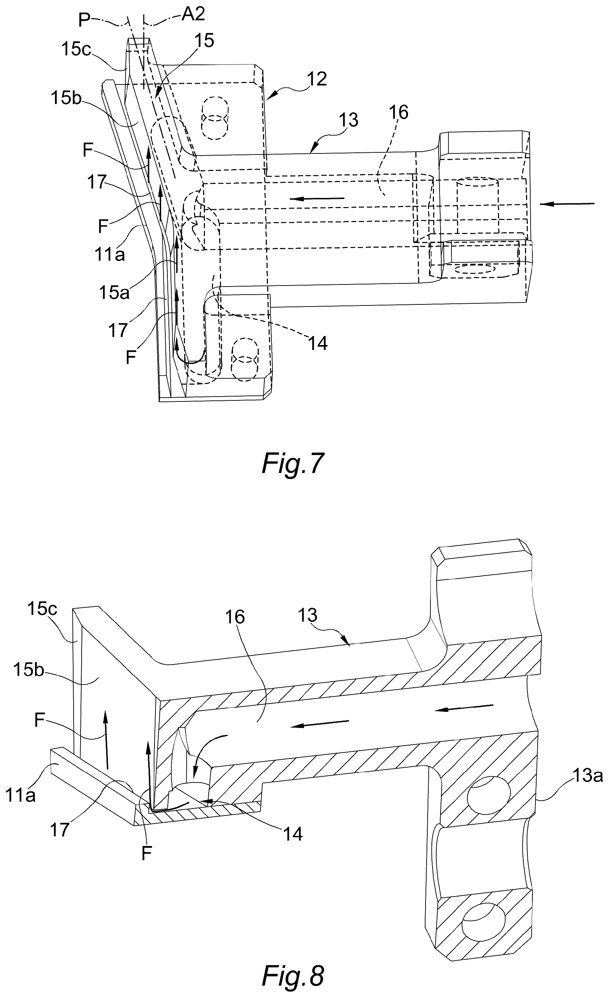

- Figure 7 is a schematic view from above and to an enlarged scale of a further component of the folding unit of Figure 5;
- Figure 8 is a sectional view along a vertical plane of the component of Figure 7;

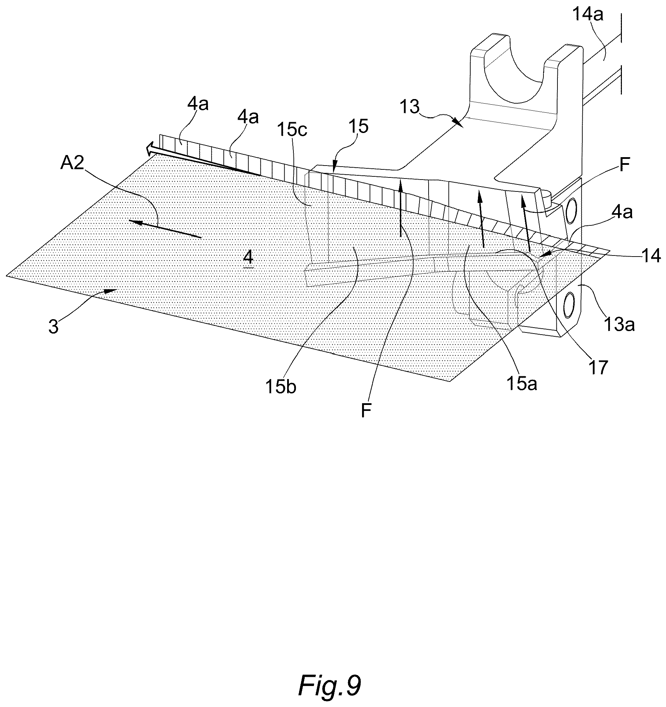

- Figure 9 is a schematic perspective view of the component of Figure 7 during the operating step.

With reference to the enclosed figures, an apparatus for building an electrochemical cell intended for battery production made according to the present solution is globally referred to as 1.

The apparatus 1, in particular, is arranged for building an electrochemical cell of the cylindrical type, wherein the internal assembly consists of a coil B obtained by spirally winding two conductor strips, constituting the anode and cathode of the electrochemical cell, and two separator strips in an alternating arrangement.

The conductor strips are indicated by the numbers 2 and 3 respectively, while the separator strips, for the sake of clarity, are not shown.

Each conductor strip 2, 3 comprises a main body 4 and a plurality of fins 4a, protruding from the main body 4 and formed one after the other along one side of the main body 4.

The apparatus 1 comprises a dispensing unit, globally indicated with 5, configured to dispense the separator strips and the conductor strips 2 and 3, as well as a winding unit, globally indicated with 6, configured to receive the separator strips and the conductor strips 2 and 3 and wind them in a spiral so as to form a coil B. In the embodiment herein shown, therefore, the coupling unit of the conductor elements is represented by the winding unit and the internal assembly is represented by the coil B.

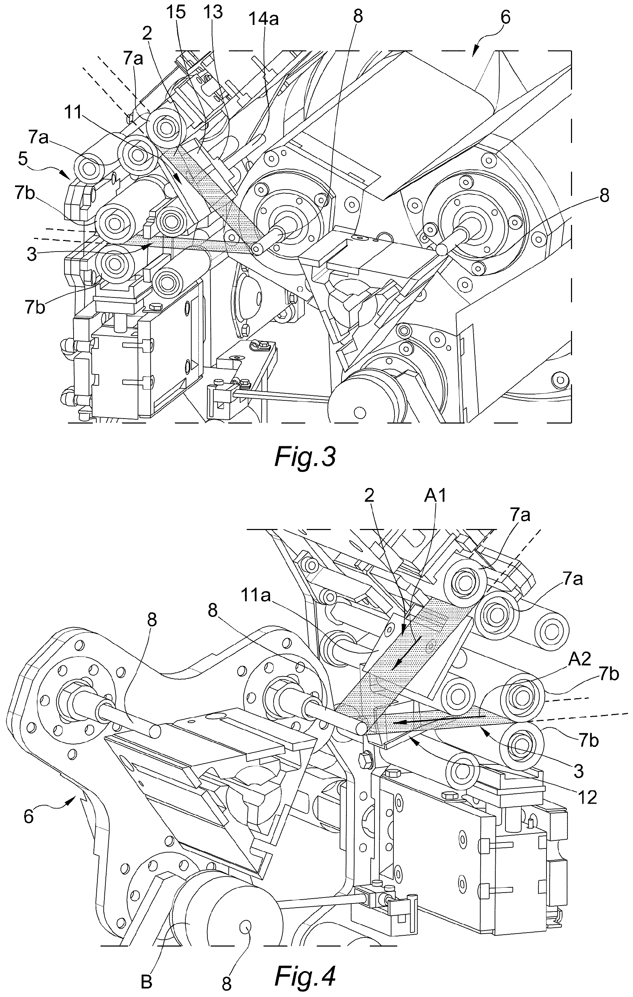

As better visible in Figures 3 and 4, the dispensing unit 5 comprises a first pair of rollers 7a, with horizontal axes, from which the conductor strip 2 is dispensed along a feed direction A1, and a second pair of rollers 7b, with horizontal axes, from which the conductor strip 3 is dispensed along a feed direction A2.

In addition, the dispensing unit 5 dispenses a first separator strip (not shown) between conductor strips 2 and 3 and a second separator strip (not shown) below the conductor strips 2 and 3, so that there is an alternating arrangement of conductor strips and separator strips leaving the dispensing unit 5 towards the winding unit 6.

The feed directions A1 and A2 of the conductor strips 2 and 3 as well as those of the separator strips leaving the dispensing unit 5 converge towards the winding unit 6, the point where all the strips overlap to be wound spirally around a winding pin 8.

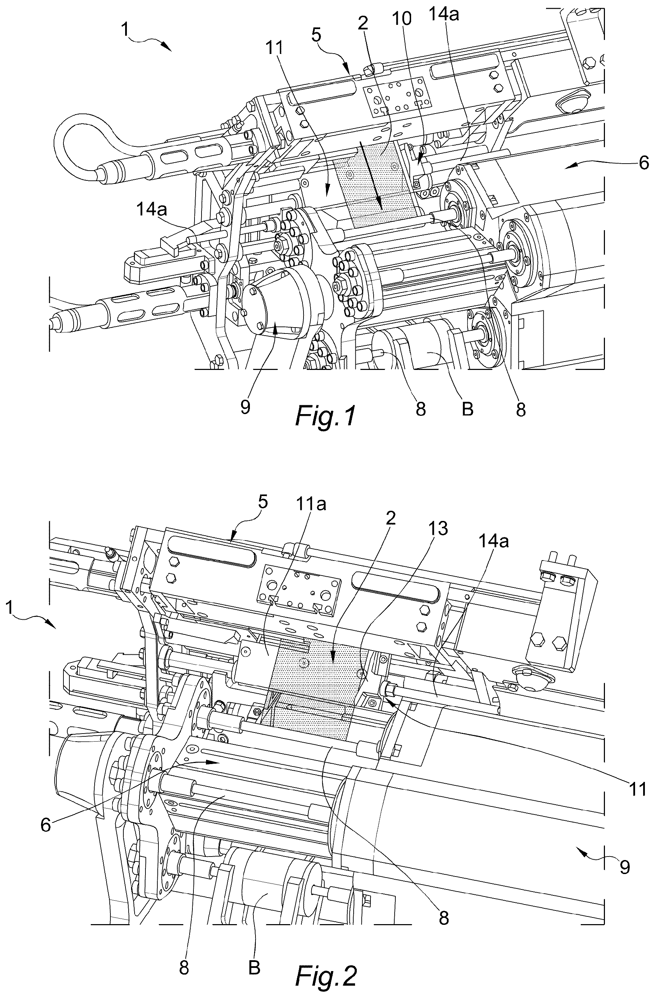

To this end, the winding unit 6 comprises three winding pins 8, arranged along a circumference defined by a drum 9 and angularly spaced from each other by 120°. Each winding pin 8 is rotatable about its own axis and is provided with special gripping elements configured to hold the ends of the strips so that, after the rotation of the winding pin about its own axis, the strips are wound in a spiral to form the coil B. The three winding pins 8 rotate, discontinuously, around a rotation axis of the drum, switching in sequence from a first operating station where the coil B is formed, to a second operating station where the coil B is closed, for example by an adhesive tape (as visible in Figures 1 and 2), to a third operating station where the coil B is released and moved to the following working units.

The axes of the winding pins 8 are horizontal and substantially parallel to the axes of the pairs of rollers 7a and 7b of the dispensing unit 5, so that the conductor strips 2 and 3 leaving the dispensing unit 5 have a planar orientation defined by the feed direction A1, A2 and a transverse direction of the respective conductor strip 2, 3, perpendicular to the feed direction, which is substantially horizontal. In the conductor strips 2 and 3 leaving the dispensing unit 5, the fins 4a are coplanar to the respective main body 4.

The conductor strips 2 and 3 leaving the dispensing unit 5 are spaced apart and have their respective fins 4a protruding from sides opposite the respective main bodies 4, so that, in the coil B formed in the subsequent winding unit 6, the fins 4a of the conductor strip 2 protrude from one axial end of the coil B and the fins 4a of the conductor strip 3 protrude from the axially opposite end.

Between the dispensing unit 5 and the winding unit 6, the apparatus 1 comprises a folding unit 10 configured to fold the fins 4a of the conductor strips 2 and 3 before they reach the winding unit 6.

In particular, the folding unit 10 is configured to fold the fins 4a with respect to the main body 4 while the conductor strips 2 and 3 are led from the dispensing unit 5 to the winding unit 6 along the respective feed direction A1, A2. In addition, the folding unit 10 is configured to fold the fins 4a without changing the respective feed direction A1, A2 of the conductor strips 2 and 3.

The folding unit 10 comprises a first folding device 11 configured to fold the fins 4a of the conductor strip 2 and a second folding device 12 configured to fold the fins 4a of the conductor strip 3.

The first folding device 11 and the second folding device 12 are essentially similar, differing in practice only in the spatial arrangement of their components due to the different positioning of the fins 4a in the two conductor strips 2, 3. Therefore, the following detailed description of the first device 11 is also valid for the second folding device 12.

The first folding device 11 comprises a base 11a, extending below the conductor strip A1, a deflector element 13 rising on one side of the base 11a, as well as a nozzle 14 formed in the deflector element 13 and connected to a duct 14a of a pneumatic circuit external to the deflector element 13.

The deflector element 13 is fixedly mounted on the frame of the folding unit 10 by means of a bracket 13a at a distance of about 30 mm from the winding pin 8 on which the conductor strip 2 is wound.

The deflector element 13 comprises a folding wall 15, extending vertically and configured to abut the fins 4a and fold them with respect to the plane defined by the main body 4. The folding wall 15 is therefore substantially perpendicular to the defined plane of the main body 4.

The folding wall 15, in detail, comprises a first portion 15a, a second portion 15b and a third portion 15c extending one after the other along the feed direction A1 from the side of the conductor strip 2 where the fins 4a are present.

The first portion 15a extends substantially parallel to the feed direction A1 for a measure of about 20 mm at a distance of about 2 mm from the fins 4a, the second portion 15b extends for a measure of about 20 mm along a folding direction P inclined with respect to the feed direction A1 by an angle of about 15°, moving closer to the main body 4, while the third portion 15c extends for a measure of about 4 mm substantially parallel to the feed direction A1.

The nozzle 14 comprises a port 16, formed within the deflector element 13 and connected to the duct 14a, and a slot 17 connected to the port 16 and open between the base 11a and the folding wall 15.

In particular, the slot 17 is open at the first portion 15a and part of the second portion 15b and is directed in such a way as to direct the flow of air from the port 16 along the folding wall 15, so as to push the fins 4a along a direction substantially perpendicular to the plane defined by the main body 4.

As the slot 17 is positioned below the conductor strip 2, the slot is configured to dispense a jet of air F along an essentially vertical direction.

The opening of the slot 17 at the first portion 15a makes it possible to fold the fins 4a with respect to the main body 4 by a minimum desired angle, before the fins 4a come into contact with the second portion 15b of the folding wall 15, while the opening of the slot 17 at the second portion 15b makes it possible to have a combined and simultaneous effect of the pneumatic action and the mechanical action, performed respectively by the jet of air F emitted by the nozzle 14 and by the abutment of the fins 4a with the second portion 15b of the folding wall 15.

In particular, when the conductor strip 2 enters the folding unit 10 the fins 4a, coplanar to the main body 4, are folded upwards by the jet of air F emitted by the nozzle 14 by a gradually increasing angle up to at least 30° before the fins 4a abut the second portion 15b of the folding wall 15.

While passing in contact with the second portion 15b, the fins are further bent upwards with respect to the main body 4 by an angle of about 90°, an angle maintained while the fins 4a pass in contact with the third portion 15c of the folding wall 15.

While leaving the folding unit 10, due to the spring back of the material of the conductor strip 2, the fins 4a move away from the position imposed by the folding wall 15 to an end position of about 45° with respect to the main body 4.

The apparatus 1 then makes it possible to fold the fins of the conductor strip by a desired angle before the strip arrives at the winding pin.

Naturally, those skilled in the art may make further modifications and variants to the above-described invention with the purpose of meeting specific and contingent application needs, variants and modifications in any case falling within the scope of protection as defined by the successive claims.

## Claims

1. Apparatus (1) for building an electrochemical cell intended for battery production, comprising:
- a dispensing unit (5) configured to dispense, along a feed direction (A1; A2), a conductor element (2; 3) having a main body (4) and a plurality of fins (4a) projecting from said main body (4),
- a coupling unit (6) configured to receive said conductor element (2; 3) dispensed from said dispensing unit (5) and couple said conductor element (2; 3) with at least another conductor element (3; 2) to form an internal assembly (B) of said electrochemical cell,
- a folding unit (10) interposed between said dispensing unit (5) and said coupling unit (6) and configured to fold said fins (4a) increasing the inclination of said fins with respect to said main body (4) while said conductor element (2; 3) is moved from said dispensing unit (5) to said coupling unit (6),
wherein said folding unit (10) comprises:
- a deflector element (13) configured to abut said fins (4a), and
- a nozzle (14) connected to a pneumatic circuit and configured to dispense a jet of air (F) against said fins (4a) in a direction transverse to a plane defined by said main body (4),
wherein, with respect to said feed direction (A1; A2), said nozzle (14) is arranged at least partially upstream of said deflector element (13), so that said jet of air (F) is dispensed against said fins (4a) before said fins (4a) abut said deflector element (13).

2. Apparatus (1) according to claim 1, wherein said nozzle (14) is formed in said deflector element (13).

3. Apparatus (1) according to claim 1 or 2, wherein said deflector element (13) comprises a folding wall (15) configured to be inclined with respect to a plane defined by said main body (4) so as to abut said fins (4a) and fold said fins (4a) with respect to said main body (4).

4. Apparatus (1) according to claim 3, wherein said folding wall (15) is configured to be substantially perpendicular to said plane defined by said main body (4).

5. Apparatus (1) according to any one of the preceding claims, wherein said nozzle (14) is configured to dispense said jet of air (F) substantially parallel to said folding wall (15).

6. Apparatus (1) according to any one of claims 3 to 5, wherein said folding wall (15) comprises a first portion (15a) and a second portion (15b) adjacent and consecutive to said first portion (15a), said second portion (15b) of folding wall (15) being extended from said first portion (15a) along a folding direction (P) inclined with respect to said feed direction (A1; A2), moving closer to said main body (4).

7. Apparatus (1) according to claim 6, wherein said folding direction (P) is inclined with respect to said feed direction (A1; A2) by an angle of between 10° and 30°.

8. Apparatus (1) according to any one of claims 6 or 7, wherein said first portion (15a) of folding wall (15) is substantially parallel to said feed direction (A1; A2).

9. Apparatus (1) according to any one of claims 6 to 8, wherein said folding wall (15) comprises a third portion (15c) extended from said second portion (15b) on an opposite side to said first portion (15a), said third portion (15c) being substantially parallel to said feed direction (A1; A2).

10. Apparatus (1) according to any one of claims 6 to 9, wherein said nozzle (14) is open at said first portion (15a) of folding wall (15) and, at least partially, at said second portion (15b) of folding wall (15).

11. Apparatus (1) according to any one of the preceding claims, wherein said conductor element (2; 3) is shaped in a strip, said coupling unit comprises a winding pin (8) of said strip to form a coil (B) of said electrochemical cell, and said deflector element (13) is at least 20 mm away from said winding pin (8).

12. Method for building an electrochemical cell intended for battery production, comprising:
- dispensing, along a feed direction (A1; A2), a conductor element (2; 3) having a main body (4) and a plurality of fins (4a) projecting from said main body (4),
- folding said fins (4a) increasing the inclination of said fins with respect to to the main body (4) of said conductor element (2; 3),
- coupling said conductor element (2; 3) with at least another conductor element (3; 2) to form an internal assembly (B) of said electrochemical cell,
wherein said folding comprises:
- dispensing a jet of air (F) against said fins (4a) in a direction transverse to a plane defined by the main body (4) of said conductor element (2; 3) so as to partially fold said fins (4a) with respect to said main body (4), and
- abutting said fins (4a) partially folded with a deflector element (13) to further fold said fins (4a) with respect to said main body (4).

13. Method according to claim 12, wherein prior to said folding, said fins (4a) are substantially coplanar with said main body (4) of said conductor element (2; 3) and wherein, preferably, after said folding and before said coupling, said fins (4a) are folded with respect to said main body (4) by an angle of at least 30°.

14. Method according to claim 12 or 13, wherein before said abutting, said fins (4a) are folded by said jet of air (F) so as to form an angle of at least 30° with respect to said main body (4).

15. Method according to any one of claims 12 to 14, wherein said dispensing a jet of air is maintained, at least in part, during said abutting.
